# EUROPEAN PATENT APPLICATION

(11) **EP 3 154 281 A1**
(43) Date of publication of application: **12.04.2017**
(21) Application number: 16188926.6
(22) Date of filing: 15.09.2016
(51) Int. Cl.: H04W 8/00, H04W 36/00, H04W 8/08, H04W 76/02, H04W 84/12

(54) **WIRELESS LOCAL AREA NETWORK (WLAN) RADIO LINK FAILURE (RLF) TRIGGERING**

(30) Priority: 05.10.2015 US 201562237251 P
(71) Applicant: Nokia Technologies Oy, 02610 Espoo (FI)
(72) Inventor: HENTTONEN, Tero, 02320 Espoo (FI); RINNE, Mika, 02320 Espoo (FI)
(74) Representative: Nokia Corporation

(57) **Abstract**

Systems, methods, apparatuses, and computer program products for wireless local area network (WLAN) radio link failure (RLF) triggering are provided.

## Description

### BACKGROUND:

Embodiments of the invention generally relate to wireless or mobile communications networks, such as, but not limited to, the Universal Mobile Telecommunications System (UMTS) Terrestrial Radio Access Network (UTRAN), Long Term Evolution (LTE) Evolved UTRAN (E-UTRAN), LTE-Advanced (LTE-A), future 5G radio access technology, and/or wireless local area networks (WLANs).

### Description of the Related Art:

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and radio access functionality is provided in the enhanced Node B (eNodeB or eNB) or many eNBs. Multiple eNBs may be involved for a single UE connection, for example, in case of Coordinated Multipoint Transmission (CoMP) and in dual connectivity. The eNBs may further be organized into different physical or logical architectures such as a cloud or distributed architectures. The eNBs may additionally have remote radio heads, Mesh or other front ends. These architectures may lead to system designs of any flexible placement of processing and protocol units.

Long Term Evolution (LTE) or E-UTRAN provides a new radio access technology and refers to the improvements of UMTS through improved efficiency and services, lower costs, and use of new spectrum opportunities. In particular, LTE is a 3GPP standard that provides for uplink peak rates of at least, for example, 75 megabits per second (Mbps) per carrier and downlink peak rates of at least, for example, 300 Mbps per carrier. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Certain releases of 3GPP LTE (e.g., LTE Rel-10, LTE Rel-11, LTE Rel-12, LTE Rel-13) are targeted towards international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while keeping the backward compatibility. One of the key features of LTE-A, introduced in LTE Rel-10, is carrier aggregation (CA), which allows for increasing the data rates through aggregation of two or more LTE carriers, e.g., to the transmission bandwidth of up to 100 MHz. LTE-A in later releases may include even wider bandwidths as specified so far. Similar improvements can be obtained over a non-ideal interface such as X2-interface between two eNBs in a dual connectivity configuration, where radio resources of a master cell group provided by the master eNB and radio resources of a secondary cell group provided by the secondary eNB are configured for the use of single UE connection. Further, aggregating or interworking on the radio access level with the wireless LAN (WLAN) access network is foreseen. Integration the use of 3GPP access (cellular access) and a WLAN access in the radio network level such as by the means of aggregation or interworking in an eNB controlled manner deviates significantly from the previously known core network level mechanisms.

The Wi-Fi Alliance (WFA) is defining new protocol extensions for the Medium Access Control (MAC) management frames for the Optimized Connectivity Experience (OCE) and for the Multiband Operations (MBO), in respective working groups. These new protocol extensions will target at improving the channel use, i.e., the use of WLAN supported operating classes, as well as they target at faster and more optimal selection of serving access points. Even further they define faster and easier link setup procedures and mobility improvements in configurable mobility domains, wherein heavy authentication procedures can be avoided and key caching is smooth. The defined use cases further include mobility mechanisms to guide cellular capable UE to leave a not well serving WLAN and connect to a cellular network instead, in case beneficial. These WLAN mechanisms may be complementary to the other mechanisms defined in the cellular network, which may unload traffic from a WLAN network to a 3GPP network or vice versa.The motivation for aggregating or interworking a 3GPP network and a WLAN network in radio access level may be to reach a higher compound throughput, better connection robustness (reliability), better chance of avoiding congested situations, better balancing of load between available radio networks. It is not uncommon that one radio network is heavily loaded in a given location while another serving network in that location is unloaded.

### SUMMARY

In a first aspect thereof the exemplary embodiments of this invention provide a method that comprises initiating a wireless local area network status report to a network node; and indicating to the network node a trigger of the wireless local area network status report.

In another aspect thereof the exemplary embodiments of this invention provide an apparatus that comprises means for initiating a wireless local area network status report to a network node; and means for indicating to the network node a trigger of the wireless local area network status report.

In yet one further aspect thereof the exemplary embodiments of this invention provide an apparatus that comprises means for configuring a user equipment to trigger a wireless local area network status report; and means for receiving the wireless local area network status report and a trigger of the wireless local area network status report from the user equipment.

### BRIEF DESCRIPTION OF THE DRAWINGS:

For proper understanding of the invention, reference should be made to the accompanying drawings, wherein:
Fig. 1 a illustrates an example signaling diagram, according to one embodiment;
Fig. 1b illustrates an example block diagram of a system, according to an embodiment;
Fig. 2a illustrates a block diagram of an apparatus, according to an embodiment;
Fig. 2b illustrates a block diagram of an apparatus, according to another embodiment;
Fig. 3a illustrates a flow diagram of a method, according to one embodiment;
Fig. 3b illustrates a flow diagram of a method, according to another embodiment; and
Fig. 3c illustrates a flow diagram of a method, according to another embodiment.

### DETAILED DESCRIPTION:

It will be readily understood that the components of the invention, as generally described and illustrated in the figures herein, may be arranged and designed in a wide variety of different configurations. Thus, the following detailed description of embodiments of systems, methods, apparatuses, and computer program products for wireless local area network (WLAN) radio link failure (RLF) triggering, as represented in the attached figures, is not intended to limit the scope of the invention, but is merely representative of some selected embodiments of the invention.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

As mentioned above, the Wi-Fi Alliance (WFA) is defining new protocol extensions (which can be referred to as extensions and features according to their defining working group names: OCE and MBO), the extensions and features of which are expected to be certified by WFA for the products. Among other things a set of MBO/OCE extensions include a feature which target defined use cases for on-loading traffic from a WLAN network to a 3GPP network, for example. More information regarding OCE and MBO and other Wi-Fi Alliance (WFA) defined groups, functionalities and certification programs may be found at the following link: http://www.wi-fi.org/who-we-are/current-work-areas.

An OCE/MBO protocol extension is assigned to issue a command to the receiving UE. As one example, when a UE is connected to a WLAN network, a protocol extension may be used to instruct the UE to transition to a cellular network. This command could happen in a situation where changing the WLAN operating class or when changing the serving AP are not expected to relieve the congestion in the WLAN aside and wherein the user service is expected to be poor. This command may be interpreted by the UE as an instruction to select any non-WLAN network, so the UE is therefore triggered to do a cell search and perform Public Land Mobile Network (PLMN) selection to connect to one of the available 3GPP networks. If the UE is already in a 3GPP network, this instruction would cause the UE to transition from the idle state to the connected state. If the UE is already in the connected state in a 3GPP network, this instruction would cause the UE to request on-loading of traffic to the 3GPP network instead of the connected (associated) WLAN.

3GPP has defined a Rel-13 Work Item (WI) entitled "LTE-WLAN Radio Level Integration and Interworking Enhancement" (RP-150510). Concerning the Radio Level Integration part, the WI leverages the LTE dual connectivity (DC) bearer split functionality (a.k.a. option 3C) currently under standardization in 3GPP. In option 3C, LTE would act as the master node and the WLAN Access Point (AP) as the slave node. The two nodes would be connected via a logical entity called Wireless Termination function (WT), which contains at least a user plane interface entity handling user plane traffic forwarded by eNB via the WLAN to the UE, and optionally also a control plane interface responsible for exchanging information between eNB and WT. This operation is referred to as LTE-WLAN aggregation (LWA). Additionally, the WI scope includes the so-called "bearer switch" functionality (i.e., 2C-architecture in context of LTE DC architecture options) for the aggregation purposes. The WI also includes network-controlled LTE-WLAN interworking (LWI) as extension of the Rel-12 WLAN interworking methods. In LWA operation, the user plane data would be routed from eNB to WT and from WT via the WLAN network to the UE. Since the eNB is in control of how much data is pushed to the UE via the WLAN network, some form of flow control information between eNB and WT and potentially also between UE and eNB has been considered to maximize the throughput of the UE.

In LWA/LWI integration, the eNB would have some control over the UE's WLAN selection. In particular, the eNB can control WLAN mobility across defined domains and across network boundaries, and the eNB could choose not to let that happen autonomously or not to be controlled by the WLAN network. However, the eNB may define WLAN mobility control so that UE has the freedom to use mobility defined by the WLAN network mechanisms between frequency channels and between service sets or between WLAN access points, as long as the eNB-defined WLAN domains or network boundaries are enforced.

While the WLAN network itself controls UE operation in the WLAN, the eNB may only be partially aware and involved in this behavior. In WLAN, the UE behaves quite autonomously regarding when to change frequency channels of a serving AP, when to change APs and which AP to select, but with OCE/MBO mechanisms the WLAN network can exchange MAC management frames with the UE to provide a better WLAN service and Quality of Experience (QoE) by providing guidelines and assistance to the UE, e.g., for the purpose of AP selection.

MBO/OCE controls, for example, how the UE should select and change channels in different frequency bands, available from a WLAN access point. This reduces interference, increases throughput and provides better quality.

MBO/OCE has several mechanisms to control how the UE should select and change serving WLAN access points. This allows fast link setup, fast re-association and avoids unnecessary security and authentication messages, when the UE moves between APs of a secured WLAN domain. This way, MBO/OCE assists UE mobility inside a WLAN network. Moreover, MBO/OCE may provide management of UE mobility across WLAN network boundaries so that a UE could become served by another WLAN or another WLAN mobility domain. Another case may occur when the WLAN just cannot provide a sufficient connectivity to the UE, despite of the OCE/MBO functionality, and hence the WLAN network may instruct the UE to go to a cellular network instead. The triggers and thresholds for such a command in the WLAN network domain may be configured together with the cellular network operation, so that actually the same instance (like an operator or a partnership) has defined and configured the networks to operate efficiently together. Such thresholds, triggers and criteria may be tunable by various means according to the observations of the UE operation in these networks.

The decided LWA/LWI configuration operates in a dual-connectivity scheme, where the radio resource control (RRC) procedures run over the LTE radio despite of the traffic routing/switching in the PDCP. The WLAN radio resources are seen as secondary cell resources in carrier aggregation (CA) operation and controlled accordingly. This is similar to a dual connectivity solution, where the eNB controls and configures the use and release of secondary cell resources. In LWA/LWI there, however, is a significant difference from the dual connectivity, as in dual connectivity the eNBs (of the same RAN) control rigorously all radio resources and the behavior of the UE, whereas in LWA/LWI the configuration and control of secondary cell resources by the eNB is not thorough as the WLAN (WLAN network or UE's WLAN functionality) controls the actual frequency channels in use, the frequency bands in use, the access points in use, the service sets in use, among other things.

For at least these reasons, there is a need to have new mechanisms to report UE's WLAN behavior to the eNB, so that the eNB can take its preferred action of the LWA/LWI configuration. An operation similar to secondary cell Radio Link Failure (RLF) report may be defined for LWA/LWI use case. Where the WLAN network acts as "the secondary cell", this kind of secondary cell RLF report is called, for example, "WLAN status report". This message is expected to be created, encoded and transmitted over the LTE radio connection according to a future defined LTE specification. While the message itself follows e.g. a radio resource control message specification, the triggers of the message may originate in the WLAN functionality of the UE. The WLAN functionality may be in a different chip or it may be integrated to the same chip as a multi-chip module with interfaces or it may be found in a system on silicon implementation, however yet having interfaces between the WLAN functionality and the LTE functionality. The triggering cause of the message hence happens deep in the WLAN stack and needs to be provided to the LTE stack for the event handling and for the proper creation of the message accordingly.

W-RLF may need to be triggered when the UE loses connection to the WLAN network due to various reasons, such as losing the WLAN connectivity, losing the WLAN signal or due to too low received signal power, too high interference, due to lack of sufficiently high throughput, due to congestion or due to too large delays in application layer.

It can be seen that, in the case where the OCE/MBO operations instructs a UE to move to a cellular network (e.g., LTE) while the UE also has LWA configuration, the LTE and WLAN network instructions may be in conflict, or at least they may not be in full alignment (and/or not fully timed). This lack of alignment of operations is due to integrating (aggregating/interworking) two networks which are actually separate in their protocols and which may at least partly be separate in their operations, despite of the LWA/LWI configuration. Embodiments of the invention are able to solve this conflict or mis-alignment and certain embodiments of the invention can resolve how the UE should operate to achieve the expected behavior and performance (from both networks point of operation).

An embodiment of the invention provides that the eNB can control the UE behavior for the W-RLF triggering. In one embodiment, the eNB may control whether the UE triggers W-RLF in case the WLAN network indicates that the UE should move to a cellular network (e.g., LTE) as per OCE/MBO signaling, for example, via WLAN MAC management frames. Further, certain embodiments provide that the UE may indicate these actions to the eNB as part of the operation. Additionally, in an embodiment, the UE may indicate the triggers of the WLAN status report (despite the triggers not being specifically controlled, identified or set by the eNB). Therefore, in an embodiment, the WLAN status report is a message or indication that the UE may send to the eNB based on the triggering event that happened in UE's operation in the WLAN network. An example of the WLAN status report may be a W-RLF report or message.

An embodiment includes signalling formats in the WLAN status report, which include WLAN management related W-RLF use cases and cause definitions. This is important for the eNB, because it is possible that otherwise the eNB would not become aware of the reasons for why WLAN service cannot be used. This may happen even in situations where the signal conditions and measurements cannot reveal a problem. Signal measurements as such are not sufficient to handle WLAN network management actions, because these may happen entirely due to the WLAN architecture, due to its service set definitions, its mobility behaviour, its mobility domain configurations and due to the security architecture and security mechanisms in use.

Some of the configurations are even dynamically changed, so it cannot be expected that the eNB would be aware of such configurations. For example, WLAN can define new service sets, new mobility domains or change the scope of their existing definitions. A WLAN network may also have tunable thresholds (which are not in awareness of the eNB), which trigger conditions and actions for the management frames.

One embodiment of the invention may cover aspects, where the eNB is involved in configuring the WLAN service sets, WLAN mobility domains and WLAN boundaries. This kind of control can be defined to happen over a control interface between the eNB and the WLAN network (or a WLAN network segment or a WLAN network access point). However, the eNB cannot be expected to be in full-control of the WLAN network configuration in terms of tuning its operational thresholds and of WLAN network management. Hence, the UE's knowledge of WLAN network management actions (via the protocol extensions), and the UE taking initiatives in its WLAN operation are important and need to be provided by the UE signalling as a decision input to the eNB.

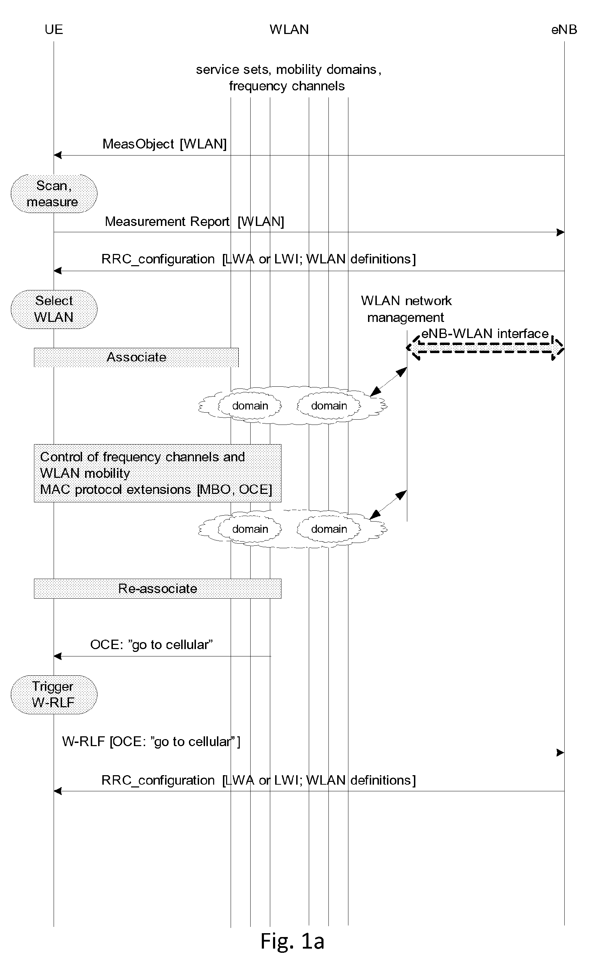

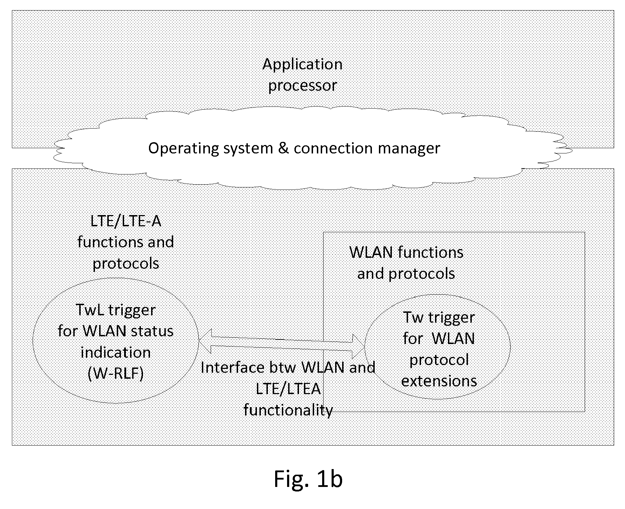

Fig. 1a illustrates a signalling diagram depicting an example of OCE/MBO operation with LWA, according to an embodiment. First, the UE is provided a measurement configuration of WLAN frequencies, including the frequencies to measure and events to trigger. Based on eNB internal information or once the eNB receives a measurement report from the UE, the eNB may define LTE-WLAN aggregation configuration that triggers UE to associate to a specific WLAN or to a WLAN found in a specific set of WLANs. The eNB may further include to said configuration reasons for which the UE is allowed (or expected) to trigger status indications of its operation in the WLAN network, such as W-RLF. W-RLF may be allowed or expected to originate for reasons such as an OCE "go to cellular-request happening in the WLAN network. Once the WLAN association is done (by the UE and the WLAN access point), and both the UE and eNB become aware of it, the LTE-WLAN aggregation may be configured by the eNB. If the LTE-WLAN configuration included descriptions of network domains or network boundaries, the UE may decide to change the APs within the boundaries given by the eNB, and UE may also receive protocol extensions instructing its mobility in the selected WLAN network. As an example of such an extreme mobility mechanism is WLAN's protocol extension to instruct the UE by a message indicative of "go to cellular" function). In case a situation occurs in the UE's WLAN operation which causes UE to trigger a W-RLF action allowed (or expected) by eNB instructions, the UE may trigger an indication to the eNB a W-RLF message descriptive that the WLAN radio service failed. This trigger may have happened despite the radio link being good enough because the WLAN requested going to cellular by its management frame protocol operation. Such an indication could be either implicit based on sending the message or explicitly encoded by a field contained within the message. Fig. 1b illustrates an example block diagram of a system, according to one embodiment. The example of Fig. 1b depicts the LTE/LTE-A functions and protocols and WLAN functions and protocols, according to an embodiment.

One embodiment of the invention is directed to eNB configured W-RLF triggering. In this embodiment, an eNB may configure a UE to trigger W-RLF if WLAN management frame would cause:
- a service set change (BSS/ESS/HESS etc.) to a domain outside of the eNB given mobility domain, i.e., a group of APs for which autonomous WLAN mobility is allowed;
- a change in mobility domain (e.g., mobility domain identifier (MDID) that names a WLAN mobility domain) to a domain outside of the eNB given mobility domain, i.e., a group of APs for which autonomous WLAN mobility is allowed;
- a change in the WLAN operating class (frequency channel), which is allowed for UE's autonomous WLAN operation; and/or
- a "go-to cellular" signaling in the serving WLAN.

It is noted that mobility domain may refer to a set of basic service sets (BSSs) within the same extended service set (ESS) that support fast BSS transitions between themselves and that are identified by the mobility domain identifier (MDID) of the set.

Another embodiment is directed to UE initiated W-RLF triggering. In this embodiment, a UE may trigger W-RLF if it receives WLAN management frame indicating:
- a service set change (BSS/ESS/HESS etc.) to a domain outside of the eNB given mobility domain, i.e., a group of APs for which autonomous WLAN mobility is allowed;
- a change in mobility domain (MDID) to a domain outside of the eNB given mobility domain, i.e., a group of APs for which autonomous WLAN mobility is allowed;
- a change in the WLAN operating class (frequency channel), which is allowed for UE's autonomous WLAN operation; and/or
- a "go-to cellular" signaling in the serving WLAN.

It is noted that a UE could initiate W-RLF triggers in different embodiments 1) as configured by the eNB or 2) from UE initiation. This means that the eNB could configure the trigger types and their triggering events carefully, and the UE would trigger accordingly, whenever these conditions are met. The eNB could alternatively configure just the trigger types in use (or expected or allowed triggering types for the UE) and it would be up to the UE to decide, when and in which conditions the trigger types will actually be activated. Other alternatives are to specify in a standard the triggers and let the UE act upon them accordingly. It is also feasible that a UE would decide the triggers according to its implementation and would signal the triggering event type to the eNB along with the W-RLF failure. In any one of these or in any of their combinations, the UE may include to the status indication (or to a W-RLF) message a Cause (a Cause-filed), for which the UE acted upon. The Cause may identify the said trigger type or more precisely a triggering event if thresholds were set, or the Cause may just be selected by the UE indicative of the WLAN management frame action, such as setting the Cause to equal to the 'go to cellular' protocol extension received from the WLAN network.

The consequence of WLAN status report may be that the UE shall prevent the WLAN instructed action from happening, at least until the eNB has either allowed/disabled this transition and has signaled RRC reconfiguration for LWA/LWI, respectively. An alternative is that the UE signals W-RLF to the eNB but yet executes the requested WLAN action. This way, the W-RLF serves as an indication for the eNB that it can cease delivering PDCP PDUs to the WLAN user plane interface (WT) and can reconfigure the RRC configuration either by completely removing the LWA/LWI or by changing the LWA/LWI configuration to happen with a new WLAN , if feasible. The eNB ceasing of delivering data to WLAN and the reconfiguration of the LWA/LWI may have a time relationship, where the ceasing is immediate or tentative and the reconfiguration will happen as appropriate. The second alternative of possibly reconfiguring the LWA/LWI to happen with a different WLAN network or a network domain could also depend on, whether the WLAN management action is according to the user preferences or is it in accordance with a local operation environment, or is it happening entirely because of the WLAN network management algorithm.

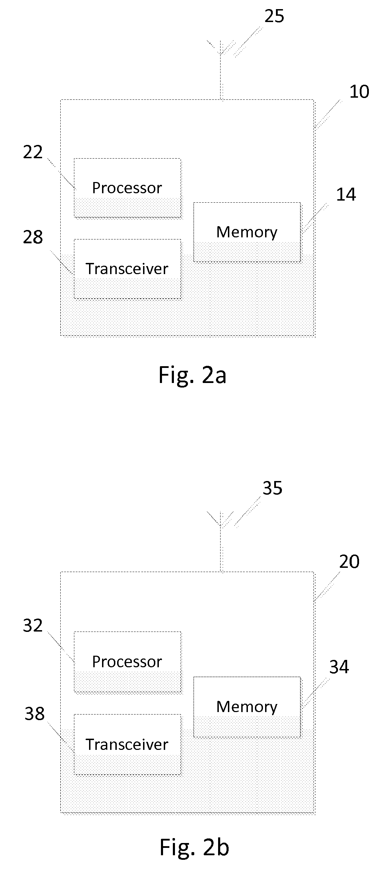

Fig. 2a illustrates an example of an apparatus 10 according to an embodiment. In an embodiment, apparatus 10 may be a node, host, or server in a communications network or serving such a network. For example, in certain embodiments, apparatus 10 may be a network node or access node for a radio access network, such as a base station in UMTS or eNB in LTE or LTE-A. However, in other embodiments, apparatus 10 may be other components within a radio access network. It should be noted that one of ordinary skill in the art would understand that apparatus 10 may include components or features not shown in Fig. 2a. The node may include an architecture integrating WLAN functionality to the same node, or it may include functionality to interface with a WLAN access point, WLAN controller or a combination thereof that is remote to the eNB node. It is also feasible that the node is composed of a cloud implementation, where the cellular eNB and some of the WLAN nodes are abstracted to communicate within a cloud, say over cloud interfaces.

As illustrated in Fig. 2a, apparatus 10 includes a processor 22 for processing information and executing instructions or operations. Processor 22 may be any type of general or specific purpose processor. While a single processor 22 is shown in Fig. 2a, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 may further include or be coupled to a memory 14 (internal or external), which may be coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 may include program instructions or computer program code that, when executed by processor 22, enable the apparatus 10 to perform tasks as described herein.

In some embodiments, apparatus 10 may also include or be coupled to one or more antennas 25 for transmitting and receiving signals and/or data to and from apparatus 10. Apparatus 10 may further include or be coupled to a transceiver 28 configured to transmit and receive information. For instance, transceiver 28 may be configured to modulate information on to a carrier waveform for transmission by the antenna(s) 25 and demodulate information received via the antenna(s) 25 for further processing by other elements of apparatus 10. In other embodiments, transceiver 28 may be capable of transmitting and receiving signals or data directly.

Processor 22 may perform functions associated with the operation of apparatus 10 which may include, for example, precoding of antenna gain/phase parameters, encoding and decoding of individual bits forming a communication message, formatting of information, and overall control of the apparatus 10, including processes related to management of communication resources.

In an embodiment, memory 14 may store software modules that provide functionality when executed by processor 22. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a network node or access node, such as a base station in UMTS or an eNB in LTE or LTE-A, for example. According to certain embodiments, apparatus 10 may be controlled by memory 14 and processor 22 to control whether a UE triggers W-RLF when a WLAN indicates that the UE should move to a cellular network, for example, according to protocol extensions (defined by OCE/MBO signaling) via WLAN MAC management frames. In an embodiment, apparatus 10 may configure the UE to trigger W-RLF if WLAN management frame would cause: a service set change (BSS/ESS/HESS etc.) to a domain outside of the eNB given mobility domain, i.e., a group of APs for which autonomous WLAN mobility is allowed, a change in mobility domain (MDID) to a domain outside of the eNB given mobility domain, i.e., a group of APs for which autonomous WLAN mobility is allowed, a change in the WLAN operating class (frequency channel), which is allowed for UE's autonomous WLAN operation; and/or a "go-to cellular" signaling in the serving WLAN.

In some embodiments, apparatus 10 may be controlled by memory 14 and processor 22 to receive an indication of WLAN status report from the UE.

Fig. 2b illustrates an example of an apparatus 20 according to another embodiment. In an embodiment, apparatus 20 may be a node or element in a communications network or associated with such a network, such as a UE, mobile device, mobile unit, a machine type UE or other device. For instance, in some embodiments, apparatus 20 may be UE in LTE or LTE-A. It should be noted that one of ordinary skill in the art would understand that apparatus 20 may include components or features not shown in Fig. 2b.

As illustrated in Fig. 2b, apparatus 20 includes a processor 32 for processing information and executing instructions or operations. Processor 32 may be any type of general or specific purpose processor. While a single processor 32 is shown in Fig. 2b, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 may further include or be coupled to a memory 34 (internal or external), which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 can be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

In some embodiments, apparatus 20 may also include or be coupled to one or more antennas 35 for transmitting and receiving signals and/or data to and from apparatus 20. Apparatus 20 may further include a transceiver 38 configured to transmit and receive information. For instance, transceiver 38 may be configured to modulate information on to a carrier waveform for transmission by the antenna(s) 35 and demodulate information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a mobile device, such as a UE in LTE or LTE-A. In this embodiment, apparatus 20 may be controlled by memory 34 and processor 32 to initiate W-RLF triggers as configured by an eNB or as initiated by apparatus 20 itself. According to an embodiment, apparatus 20 may also be controlled by memory 34 and processor 32 to indicate, to the eNB, triggers of WLAN status report.

In one embodiment, apparatus 20 may be controlled by memory 34 and processor 32 to initiate W-RLF triggers if apparatus 20 receives WLAN management frame indicating: a service set change (BSS/ESS/HESS etc.) to a domain outside of the eNB given mobility domain, i.e., a group of APs for which autonomous WLAN mobility is allowed, a change in mobility domain (MDID) to a domain outside of the eNB given mobility domain, i.e., a group of APs for which autonomous WLAN mobility is allowed, a change in the WLAN operating class (frequency channel), which is allowed for UE's autonomous WLAN operation; and/or a "go-to cellular" signaling in the serving WLAN.

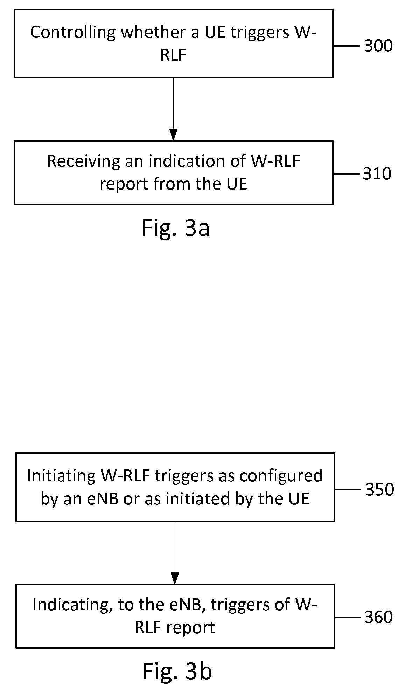

Fig. 3a illustrates an example flow diagram of a method, according to one embodiment. In certain embodiments, the method of Fig. 5a may be performed by a network node, such as a base station, eNB, and/or Wi-Fi access point, for example. As illustrated in Fig. 3a, the method may include, at 300, controlling whether a UE triggers W-RLF when a WLAN indicates that the UE should move to a cellular network, for example, according to protocol extensions (of defined OCE/MBO signaling) via WLAN MAC management frames. In an embodiment, the controlling may include configuring the UE to trigger W-RLF if WLAN management frame would cause: a service set change (BSS/ESS/HESS etc.) to a domain outside of the eNB given mobility domain, i.e., a group of APs for which autonomous WLAN mobility is allowed, a change in mobility domain (MDID) to a domain outside of the eNB given mobility domain, i.e., a group of APs for which autonomous WLAN mobility is allowed, a change in the WLAN operating class (frequency channel), which is allowed for UE's autonomous WLAN operation; and/or a "go-to cellular" signaling in the serving WLAN. In some embodiments, the method may also include, at 310, receiving an indication of WLAN status report from the UE.

Fig. 3b illustrates an example flow diagram of a method, according to another embodiment of the invention. In certain embodiments, the method of Fig. 3b may be performed by a device, such as a mobile device or UE in LTE, LTE-A, or 5G. In an embodiment, the method may include, at 350, initiating W-RLF triggers as configured by an eNB or as initiated by the UE itself. In one embodiment, the initiating may include initiating W-RLF triggers if the UE receives WLAN management frame indicating: a service set change (BSS/ESS/HESS etc.) to a domain outside of the eNB given mobility domain, i.e., a group of APs for which autonomous WLAN mobility is allowed, a change in mobility domain (MDID) to a domain outside of the eNB given mobility domain, i.e., a group of APs for which autonomous WLAN mobility is allowed, a change in the WLAN operating class (frequency channel), which is allowed for UE's autonomous WLAN operation; and/or a "go-to cellular" signaling in the serving WLAN. According to an embodiment, the method may also include, at 360, indicating, to the eNB, triggers of WLAN status report.

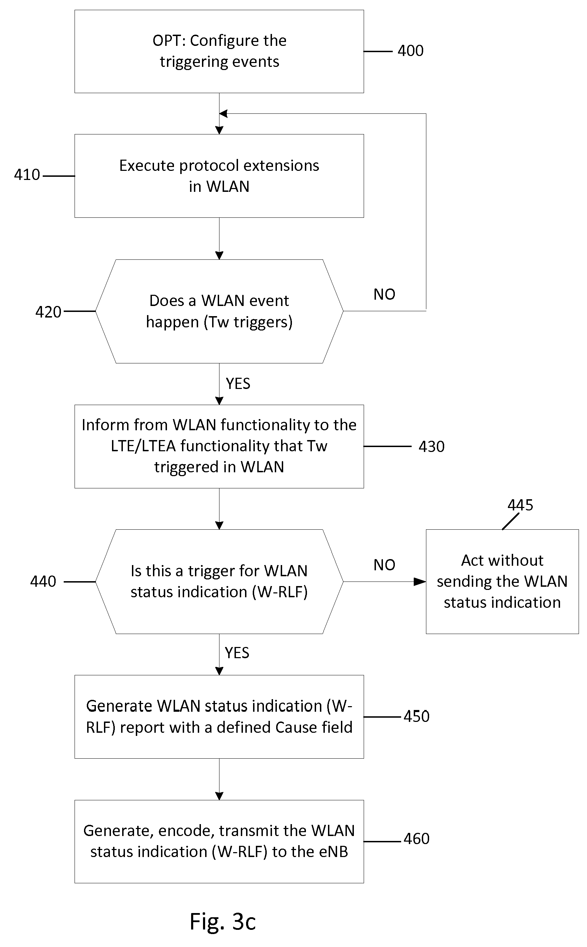

Fig. 3c illustrates an example flow diagram of a method, according to another embodiment of the invention. In certain embodiments, the method of Fig. 3b may be performed by a device, such as a mobile device or UE in LTE, LTE-A, or 5G. The method of Fig. 3c may include, at 400, configuring the triggering events. At 410, the method may include executing protocol extensions in WLAN and, at 420, determining whether a WLAN event occurred (Tw triggers). If it is determined that a WLAN event has not occurred, then the method may return to step 410. If a WLAN event has occurred, the method continues, at 430, by informing from WLAN functionality to LTE/LTE-A functionality (see Fig. 1b) that Tw triggered in WLAN. The method may then include, at 440, determining if it is a trigger for WLAN status indication (W-RLF). If it is not a trigger for WLAN status indication, then the method may include, at 445, acting without sending the WLAN status indication. If it is determined that it is a trigger for WLAN status indication, then the method may include, at 450, generating WLAN status indication (e.g., W-RLF report) with a defined cause field. The method may also include, at 460, generating, encoding, and transmitting the WLAN status indication (W-RLF) to the eNB.

According to embodiments, programs, also called program products or computer programs, including software routines, applets and macros, may be stored in any apparatus-readable data storage medium and they include program instructions to perform particular tasks. A computer program product may comprise one or more computer-executable components which, when the program is run, are configured to carry out embodiments. The one or more computer-executable components may be at least one software code or portions of it. Modifications and configurations required for implementing functionality of an embodiment may be performed as routine(s), which may be implemented as added or updated software routine(s). Software routine(s) may be downloaded into the apparatus.

Software or a computer program code or portions of it may be in a source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other embodiments, the functionality of any method or apparatus described herein may be performed by hardware, for example through the use of an application specific integrated circuit (ASIC), a programmable gate array (PGA), a field programmable gate array (FPGA), or any other combination of hardware and software. In yet another embodiment, the functionality may be implemented as a signal, a non-tangible means that may be carried by an electromagnetic signal downloaded from the Internet or other network.

According to an embodiment, an apparatus, such as a node, device, or a corresponding component, may be configured as a computer or a microprocessor, such as single-chip computer element, or as a chipset, including at least a memory for providing storage capacity used for arithmetic operation and an operation processor for executing the arithmetic operation.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. A method, comprising:
initiating a wireless local area network status report to a network node; and
indicating, to the network node, a trigger of the wireless local area network status report.

2. The method as in claim 1, wherein the trigger of the wireless local area network status report is a radio link failure.

3. The method as in claim 1 or 2, wherein the status report is initiated by receiving a wireless local area network management frame which indicates a service set change outside of a network node configured mobility domain wherein the mobility domain is a group of access points for which user equipment's autonomous wireless local area network mobility is allowed.

4. The method as in claim 1 or 2, wherein the status report is initiated by a change in mobility domain to a domain outside of a network node configured mobility domain wherein the mobility domain is a group of access points for which user equipment's autonomous wireless local area network mobility is allowed.

5. The method as in claim 1 or 2, wherein the status report is initiated by a change in at least one of wireless local area network operating class and frequency channel, which is allowed for the user equipment's autonomous wireless local area network operation.

6. The method as in claim 1 or 2, wherein the status report is initiated by receiving a go to cellular signaling from a serving wireless local area network which on-loads traffic from the wireless local area network to a cellular network.

7. An apparatus, comprising:
means for initiating a wireless local area network status report to a network node; and
means for indicating, to the network node, a trigger of the wireless local area network status report.

8. The apparatus as in claim 7, wherein the trigger is a radio link failure.

9. The apparatus as in claim 7 or 8, wherein the status report is initiated by receiving a wireless local area network management frame which indicates a service set change outside of a network node configured mobility domain wherein the mobility domain is a group of access points for which the apparatus's autonomous wireless local area network mobility is allowed.

10. The apparatus as in claim 7 or 8, wherein the status report is initiated by a change in mobility domain to a domain outside of a network node configured mobility domain wherein the mobility domain is a group of access points for which the apparatus's autonomous wireless local area network mobility is allowed.

11. The apparatus as in claim 7 or 8, wherein the status report is initiated by a change in at least one of wireless local area network operating class and frequency channel, which is allowed for the apparatus's autonomous wireless local area network operation.

12. The apparatus as in claim 7 or 8, wherein the status report is initiated by receiving a go to cellular signaling from a serving wireless local area network which on-loads traffic from the wireless local area network to a cellular network.

13. An apparatus, comprising:
means for configuring a user equipment to trigger a wireless local area network status report; and
means for receiving the wireless local area network status report and a trigger of the wireless local area network status report from the user equipment.

14. The apparatus as in claim 13, wherein the trigger of the wireless local area network status report is a radio link failure.

15. The apparatus as in claim 13 or 14, wherein the status report is initiated by a wireless local area network management frame which causes a service set change of the user equipment outside of a configured mobility domain wherein the mobility domain is a group of access points for which user equipment's autonomous wireless local area network mobility is allowed.
